# EUROPEAN PATENT SPECIFICATION

(11) **EP 3 604 916 B1**
(45) Date of publication and mention of the grant of the patent: **23.12.2020**
(21) Application number: 19189480.7
(22) Date of filing: 31.07.2019
(51) Int. Cl.: F21V 23/06, B60Q 1/00, F21S 41/19

(54) **ELECTRIC CONNECTOR ASSEMBLY DEVICE, SYSTEM AND METHOD IN A LIGHTING DEVICE FOR VEHICLES**
ELEKTRISCHE VERBINDERBAUGRUPPE, SYSTEM UND VERFAHREN IN EINER BELEUCHTUNGSVORRICHTUNG FÜR FAHRZEUGE
DISPOSITIF, SYSTÈME ET PROCÉDÉ D'ASSEMBLAGE D'UN CONNECTEUR ÉLECTRIQUE DANS UN DISPOSITIF D'ÉCLAIRAGE POUR VÉHICULES

(30) Priority: 31.07.2018 IT 201800007686
(43) Date of publication of application: 05.02.2020
(73) Proprietor: Marelli Automotive Lighting Italy S.p.A., 10078 Venaria Reale (TO) (IT)
(72) Inventor: FALESSI, Alessandro, 10146 TORINO (IT)
(74) Representative: Plebani, Rinaldo

(56) References cited:
- EP-A1- 1 535 369
- US-B1- 6 302 568

## Description

### Technical field of the invention

The present invention relates to an electric connector assembly device, system and method in a lighting device for vehicles, in particular inside a front headlamp of a vehicle.

### Background Art

Lighting devices for vehicles are increasingly complex and compact; furthermore, for technological and economic reasons, most lighting devices for vehicles and in particular, front headlamps, can no longer be dismantled down to the single components thereof once they have been assembled.

For example, a front headlamp normally comprises a cup-shaped headlamp body and a lens (which is generally clear, but can also be optically active) which closes the headlamp body at the front and is glued to the headlamp body, so that once mounted it can no longer be removed. One or more light sources, for example LED lamps, with their accessories and electric connectors, are housed inside the headlamp body, in a position facing the lens. Further electric connectors can be housed inside the headlamp body to supply various accessories, such as sensors, actuator devices for moving the light sources, and so on. Once the lens has been glued to the headlamp body, all of these connectors and the light sources themselves are only accessible through openings in the headlamp body, generally round holes, sealed by means of removable caps.

In particular, in modern headlamps, the lens is provided with a frame and forms an actual unit, already bearing the lamps or part of these; thus, with the lens and headlamp body assembled, the electric supply connectors, which are housed in the headlamp body, must be connected to female connectors carried by the unit provided with the lens. Thus, such connection can only be made through one or more of the aforesaid openings, which have, however, reduced dimensions.

Consequently, at present, it is difficult to carry out the manual electric connection of a connector (generally male) to the light source/accessory to be supplied (provided with a female connector) through such openings or holes, which are often much smaller than the size of a hand of an assembly operator.

Document US 6 302 568 B1 discloses an electric connector assembly device according to the preamble of claim 1 of the present invention.

### Summary of the invention

The object of the present invention is to provide an electric connector assembly device, system and method in a lighting device for vehicles, which allows the electric and mechanical connection of the connector to be carried out in a reception seat for the same in a precise, simple and quick manner, operating only through an access hole obtained in a lateral wall of the lighting device.

Thus, according to the present invention, an electric connector assembly device, system and method in a lighting device for vehicles are provided having the features disclosed in the appended claims.

### Brief Description of the Drawings

Further features and advantages of the present invention will become clearer from the following description of a non-limiting embodiment thereof, with reference to the figures in the appended drawings, in which:
- Figure 1 schematically shows a lighting device for vehicles, in this case a front headlamp, provided internally with an electric connector coupled to a reception seat arranged within the lighting device;
- Figure 2 is a view from a front three-quarter perspective and on an enlarged scale of an assembly device according to the invention, which can be used to carry out the assembly of the electric connector in the reception seat in the headlamp in figure 1;
- Figure 3 shows a perspective view of a first component of the assembly device in figure 2;
- Figure 4 shows a perspective view of a second component of the assembly device in figure 2;
- Figure 5 shows a perspective view from below, on an enlarged scale, of a detail of the assembly device in figure 2;
- Figures 6 and 7 show perspective views, with parts removed for the sake of simplicity, of the lighting device in figure 1 and of the assembly device in figure 2 in configurations of use; and
- Figures 8, 9 and 10 show elevation, partially sectioned side views of the lighting device in figure 1 and of the assembly device in figure 2 in three different steps of assembly of the electric connector in the reception seat.

### Detailed description

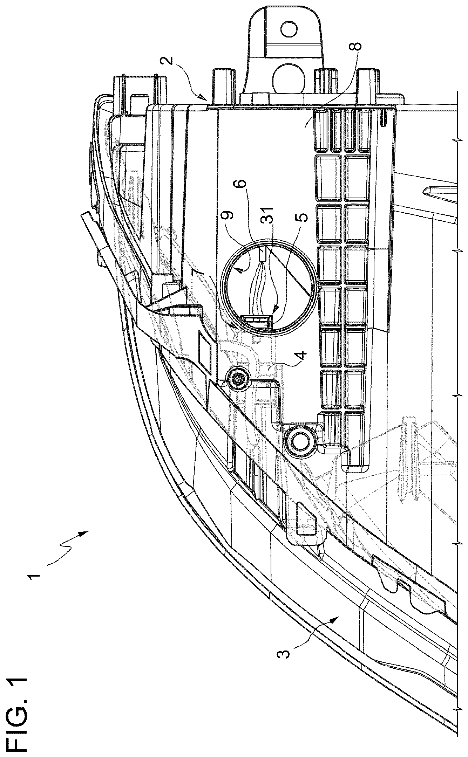

With reference to figures 1 to 7, reference numeral 1 globally denotes a lighting device for vehicles, in the non-limiting embodiment that is illustrated, the lighting device is a front headlamp of the type known in the art, comprising a cup-shaped headlamp body 2 and a lens unit 3, which can be coupled at the front to the headlamp body 2 to close the latter; the lens unit 3 is provided integral with at least one light source (for example a LED lamp) or accessory 4 (illustrated in transparency), which must be supplied by a male electric connector 5 housed inside the headlamp body 2 and connected to a multi-wire electric supply cable 6; for that purpose, the lens unit 3 is provided with a reception seat 7 for the electric connector 5, which seat is formed by a female electric connector of the type known in the prior art, also illustrated in transparency; such female connector or reception seat 7, once the lens unit 3 has been irremovably coupled to the headlamp body 2, for example, by gluing, also remains housed inside the headlamp body 2 or in any case inside the lighting device 1 considered as a whole.

The headlamp body 2 is delimited by a lateral wall 8 and, in order to carry out the connection or assembly of the connector 5 in the reception seat 7, the lateral wall 8 is provided, immediately adjacent to the reception seat 7, with an access through hole 9, of the type known in the art, which, with the lighting device 1 in use, is closed by a cap, of the type known in the art and not illustrated for the sake of simplicity.

The hole 9, illustrated by way of non-limiting example, is circular, but it could be formed by a through opening of any shape, for example, square or rectangular.

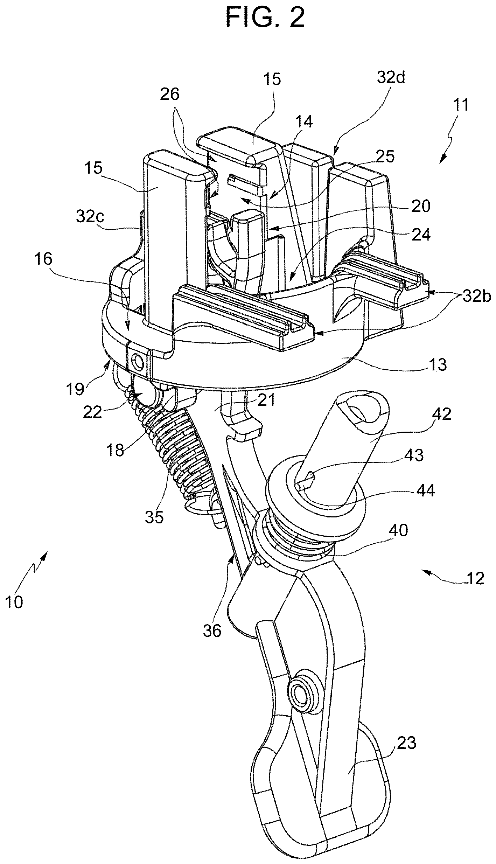

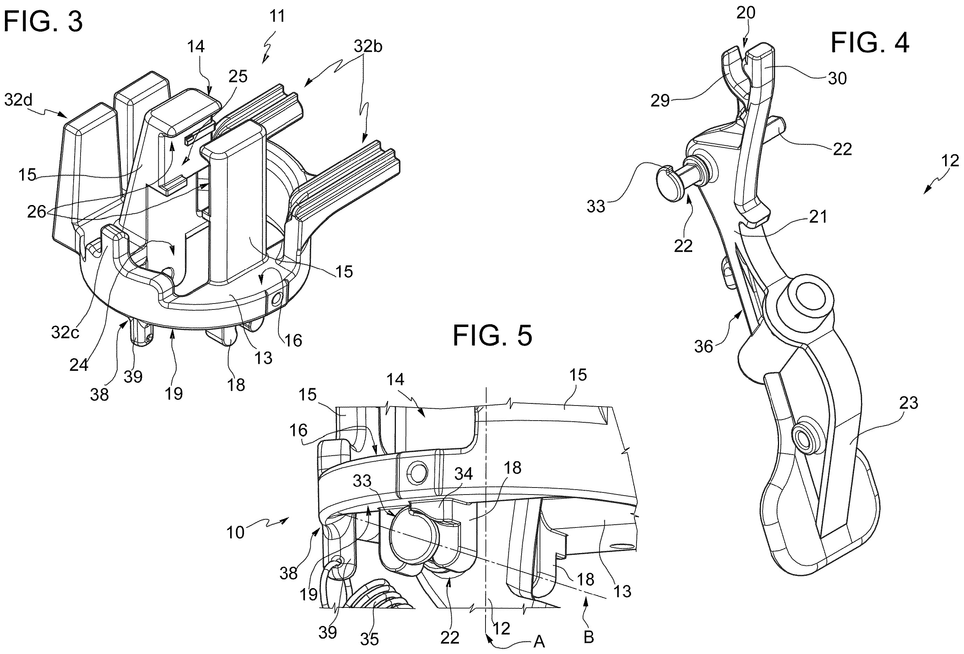

Since the hole 8 usually has reduced dimensions, in order to carry out the operations for assembling the electric connector 5 in the vehicle lighting device 1 in a simple and precise manner, the assembly device 10 provided according to the invention, illustrated as a whole in figure 2 and in detail in figures 3-5, is configured to carry out an electric and mechanical connection of the electric connector 5 in the reception seat 7 thereof arranged within the lighting device 1 and through the access hole 9.

The assembly device 10 comprises a retaining and aligning support 11, as will be seen, for the electric connector 5 and a command lever 12 coupled in an oscillating manner to the support 11.

The support 11, in turn, comprises an annular base 13 configured to be coupled, in use, to the access hole 9 and a fork 14 configured to receive the electric connector 5 in a sliding manner, as will be seen.

In the non-limiting embodiment that is illustrated, the annular base 13 has a circular plan, in that, generally and preferably, it has the same shape as the hole 9, but it can also have any different shape provided that its dimensions are such that the annular base 13 and the whole support 11 can pass, with radial clearance, through the access hole 9.

The fork 14 is arranged radially inside the annular base 13, so as to be surrounded by the annular base 13 and is defined by a pair of first uprights 15 facing one another and which extend in a cantilever fashion in an axial direction ("axial" with respect to an axis A - figure 5 - passing through a geometric centre of the annular base 13 and coinciding, in use, with an axis of symmetry - not shown for the sake of simplicity - of the access hole 9) from a first face 16 of the annular base 13 (figures 2 and 3) configured so as to face, in use, the access hole 9.

The support 11 further comprises a pair of second uprights 18, which extend in a cantilever fashion from a second face 19 of the annular base 13, opposite the first face 16, in the same axial direction defined by the axis A.

The uprights 18 are hingedly coupled to the command lever 12 in a manner that will be described later on and in such a way that the command lever 12 is integrally and idly connected to the uprights 18 in order to be able to rotate with respect to the support 11 about an axis B (figure 5) perpendicular to and intersecting the axis A.

The command lever 12 (figure 4) comprises a first fork-shaped end 20, configured to engage the electric connector 5, by snapping, as will be described below in further detail, an intermediate portion 21 provided with hinge coupling means 22 for coupling to the uprights 18, and a second end 23, opposite the end 20 configured as a handle for an operator.

The coupling means 22 are defined, in the non-limiting embodiment that is illustrated, by two simple rectilinear pins, coaxial to one another, which protrude in a cantilever fashion from opposite sides or flanks of the intermediate portion 21 and which idly engage the uprights 18, by snapping, each of which is fork-shaped on the side opposite the face 19 and is elastically deformable. Clearly, the dual solution would be equally possible and effective.

The end 20 of the command lever 12 is mounted between the uprights 15, inside a space or empty central recess 24 in the annular base 13 and oscillates inside a radial channel 25 (with respect to the annular base 13) that is delimited on both longitudinal sides thereof by the uprights 15.

The channel 25 is shaped in order to receive, in use, the whole electric connector 5, which, in such condition, cooperates in contact with the end 20.

The channel 25 is provided with C-shaped guides 26, arranged radially in a position that is diametric with respect to the annular base 13, to support and guide the connector 5.

The guides 26 are obtained integrally as a single piece on respective opposite sides of the uprights 15 facing one another.

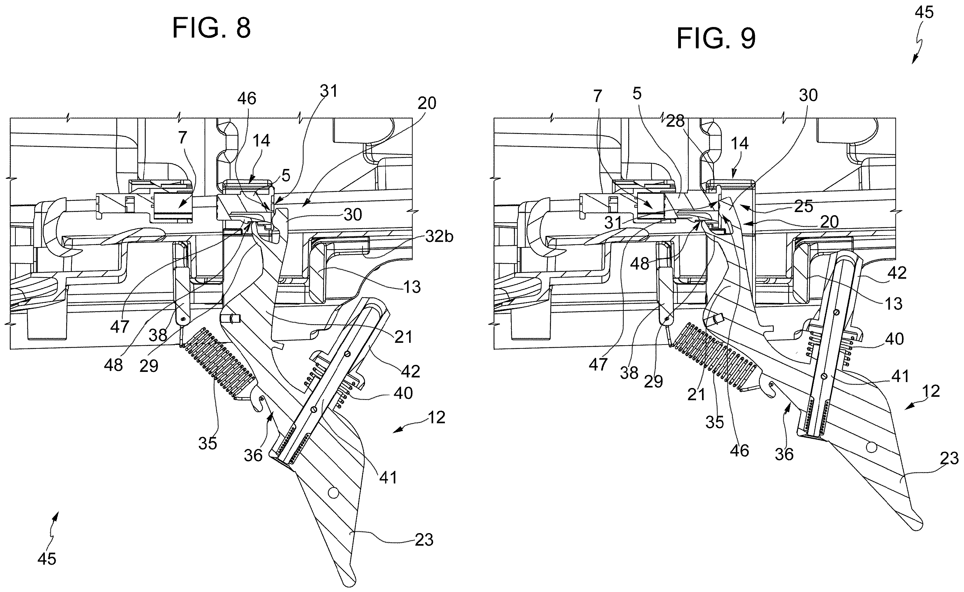

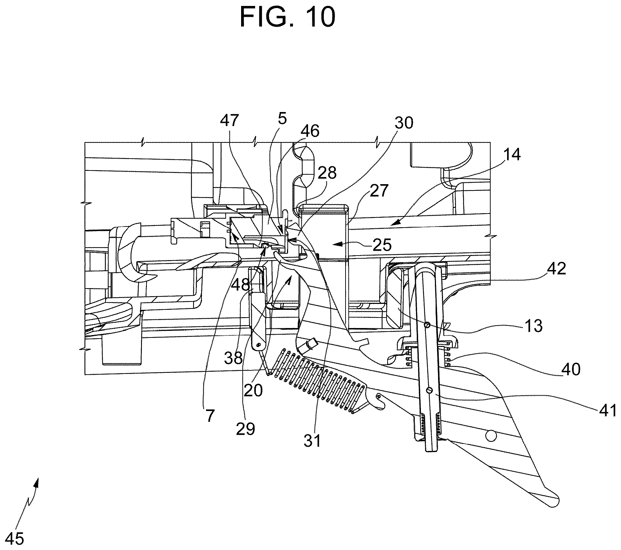

The first end 20 of the command lever 12 is mobile between a first and a second opposite end 27, 28 (figures 9 and 10) of the radial channel 25 after a rotation of the command lever 12 on the hinge coupling means (pins) 22, respectively between a first end of stroke position of the command lever 12, illustrated in figures 2, 6, 7 and 8, and a second end of stroke position of the command lever 12, illustrated in figure 10.

As seen previously, the uprights 15 are configured to be inserted, in use, inside the lighting device 1 through the access hole 9, to which they are suitable to be coupled in a through manner and with radial clearance.

The first fork-shaped end 20 of the command lever 12 includes a first branch 29 defined by an elastically deformable wing arranged in a position proximal to the intermediate portion 21, and a second branch 30, arranged in a distal position from the intermediate portion 21 and defined by a substantially rigid overhang configured to be coupled, in use, to a rear wall 31 of the electric connector 5 facing in use, a side opposite the reception seat 7.

In particular, the overhang 30 is configured to cooperate with the wall 31 without interfering with the electric cable 6, which is connected electrically and mechanically to the connector 5 at the rear wall 31.

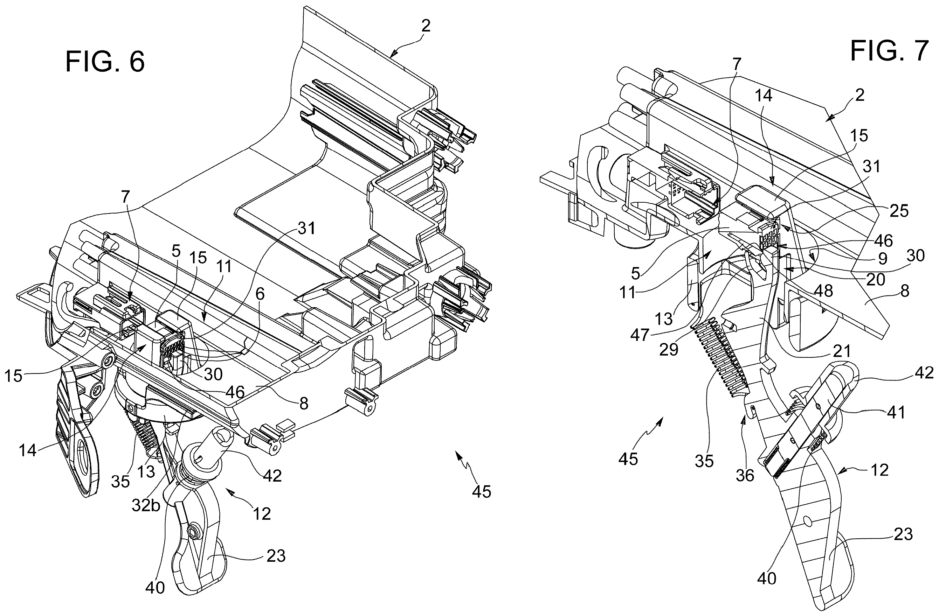

The command lever 12 is suitable, after a rotation thereof on the pins 22 and about the axis B from the first to the second end of stroke position, to cause the electric connector 5 to slide, in use, inside the radial channel 25 between a retracted position, shown in figures 6,7 and 8, wherein the command lever 12 is in the first end of stroke position and the electric connector 5 is entirely housed in the radial channel 25 delimited between the first uprights 15, and an extracted position, shown in figure 10, wherein the command lever 12 is in the second end of stroke position and the electric connector 5 is completely outside the radial channel 25 and fully inserted in the reception seat 7.

To allow an operator using the device 10 to achieve a correct orientation of the connector 5 even without being able to see it, the annular base 13 comprises aligning and shouldering means 32 (figures 2 and 3) arranged radially towards the outside of the annular base 13 and configured to be coupled, in use, to the lateral wall 8 of the lighting device 1; in particular, the aligning and shouldering means 32 are suitable to be coupled to the lateral wall 8 in a position adjacent to the access hole 9.

The aligning and shouldering means 32 consist of a pair of longitudinal members 32b, which extend in a cantilever fashion from the annular base 13 parallel to the channel 25 and from the side of the end 27 and of a prismatic pin 32c, which extends axially in a cantilever fashion from the annular base 13, from the side of, and parallel to, the uprights 15; in the example that is illustrated, they also comprise a box element 32d, which extends laterally and axially in a cantilever fashion from the annular base 13, on the side of the uprights 15. Not only do such aligning and shouldering means 32 allow the channel 25 to be oriented so as to be perfectly aligned with the reception seat 7, even when not in view, but they also act as a contrast element during the rotation of the command lever 12, discharging the forces induced by the movement of the lever 12 and the connector 5 onto the lateral wall 8.

Preferably, the hinge coupling means 22 of the command lever 12 also comprise an end of stroke stop 33 to block the command lever 12 in the first end of stroke position when the command lever 12 rotates from the second and towards the first end of stroke position; the end of stroke arrangement is formed, in the example that is illustrated, by a radial tooth 33, which protrudes radially, in a cantilever fashion, from one of the pins 22 and which cooperates in abutment, when the lever 12 is in the first end of stroke position (wherein the channel 25 is free and can internally receive the whole connector 5) with a step 34 (figure 5) obtained laterally from, and as a single piece with, a corresponding upright 18.

Preferably, to facilitate the movement of the command lever 12, the assembly device 10 further comprises a first reaction spring 35, which connects a first edge 36 of the second end 23 of the command lever 12, for example, provided with a hook 37, to an edge section 38 of the second face 19 of the annular base 13, for example provided, on the side of the face 19, with a perforated connection pin 39 (figures 3 and 5) .

The first edge 36 faces the side opposite the first fork-shaped end 20 of the command lever 12, while the edge section 38 with the relative pin 39 is arranged in a position radially opposite the command lever 20.

The first reaction spring 35 is connected to the hook 37 of the edge 36 in a distal position from the hinge coupling means 22 and is configured to block a rotation of the command lever 12 from the first to the second end of stroke position thereof.

Furthermore, the assembly device 10 also comprises a second reaction spring 40 mounted coaxially to a pin 41 integrally carried by the second end 23 of the command lever 12, from which it axially protrudes in a cantilever fashion from the side opposite the reaction spring 35 and on which a sleeve 42 is mounted in an axially sliding and telescopic manner, the sleeve, in turn, axially protruding in a cantilever fashion from the pin 41 on the side opposite the second end 23 of the command lever 12.

The second reaction spring 40 is packed between the sleeve 42 and the second end 23 of the command lever 12.

The pin 41 is further configured to cooperate, in use, with the lateral wall 8 of the lighting device 1 provided with the access hole 9 to serve as an end of stroke stop for the command lever 12 towards the second end of stroke position. The sleeve 42 is slidably connected to the pin 41, so as not to slip off under the thrust of the spring 40, which is preloaded, through an eyelet 43 engaged by a small pin 44, which is fixed radially in a cantilever fashion to the pin 41. Also the sleeve 42, like the pin 41 is configured to cooperate in abutment against the lateral wall 8. In particular, the sleeve 42 and pin 41 are configured to cooperate, in use, in sequence, against the lateral wall 8, first the sleeve 42 and then the pin 41, after the relative translation between the same against the action of the spring 40 allowed by the eyelet 43.

According to a further feature of the invention, the pin 41 is designed to cut or leave a mark on the lateral wall 8 of the lighting device 1 provided with the access hole 9, at the end of the assembly operation, i.e. when it abuts against the lateral wall 8.

In this way, it is possible, even afterwards, to check that the connection has been carried out and completed correctly.

For such purpose, the pin 41 can have an end opposite the reaction spring 40 configured as a blade, or such end can be fitted with a stamp or a writing tip and the sleeve 42 serves to prevent cuts in the case of the blade, or to protect the writing tip in the case of a stamp/pen.

From the above description, it is clear that the invention also relates to an assembly system 45 (figures 6-10), of an electric connector 5 inside a lighting device 1 of a vehicle, comprising the electric connector 5, a lateral wall 8 of the lighting device 1 provided with an access hole 9 inside the lighting device 1, a reception seat 7 for the electric connector 5 arranged inside the lighting device 1 in a position adjacent to the access hole 9, and the previously described assembly device 10, configured to perform a mechanical and electric connection of the electric connector 5 in the reception seat 7.

According to one aspect of the invention, the first elastically deformable wing 29 of the end 20 of the command lever 12 is suitable to cooperate, by snapping, with the electric connector 5 immediately below a lower edge 46 of the rear wall 31 of the electric connector 5 and, in particular, with a second elastically deformable wing 47, obtained as a single piece integral with the electric connector 5 below it, to which the wing 29 is coupled, by snapping; the second branch 30 or rigid overhang of the end 20 cooperates, instead, directly in contact with the edge 46 of the rear wall 31 of the electric connector 5, facing, in use, a side opposite the reception seat 7.

Finally, the invention also relates to a method for assembling an electric connector 5 in a reception seat 7 for the same inside a lighting device 1 of a vehicle, comprising the steps of:
a) providing, through a lateral wall 8 of the lighting device, an access hole 9 arranged adjacent to the reception seat 7;
b) arranging an assembly device 10 comprising a retaining and aligning support 11 for the electric connector 5 and a command lever 12 coupled in a tilting manner to the support 11, wherein the support 11 comprises an annular base 13 and a first fork 14 for receiving the electric connector 5 in a sliding manner, and the command lever 12 comprises a first fork-shaped end 20 configured to engage the electric connector 5 by snapping;
c) manually inserting the electric connector 5 inside a radial channel 25 defined by the first fork 14 keeping the command lever 12 in a first end of stroke position and so that the first end 20 of the command lever 12 couples to the electric connector 5;
d) introducing the first fork 14, with the electric connector 5 previously housed in the radial channel 25 thereof and coupled to the first end 20 of the command lever 12 inside the access hole 9 and peripherally coupling the annular base 13 of the support 11 to the access hole 9;
e) rotating the command lever 12 on the support 11 from the first and towards a second end of stroke position so as to push the first end 20 of the command lever 12 towards the reception seat 7 to extract the electric connector from 5 the radial channel 25 and insert it into the reception seat 7; during this axial sliding movement the electric connector 5 cooperates with the guides 26;
f) the first fork-shaped end 20 of the command lever 12 being configured to uncouple itself from the electric connector 5 when the command lever 12 reaches the second end of stroke position. This final step is permitted by the fact that the branch 29 defined by an elastically deformable wing of the end 20 of the command lever 12 cooperates with the lower wing 47 of the electric connector 5, which, in order to hook onto and unhook from the wing 29 better, by snapping, is provided with a recess 48, which is engaged by the free end of the wing 29.

Furthermore, according to the method of the invention, aligning and shouldering means 32 are arranged on the support 11 of the assembly device 10, such means being configured to be coupled to the lateral wall 8 of the lighting device 1 and/or to the access hole 9 for aligning the radial channel 25 with the reception seat 7.

In use, the electric connector 5 is arranged in the headlamp body 2 already connected to the electric cable 6, which is of a sufficient length to allow wide movements of the electric connector 5.

Thus, an operator can extract the electric connector 5 from the headlamp body 2 through the access hole 9 and insert it in a sliding manner inside the channel 25 until it abuts against the branch or overhang 30 of the end 20 of the command lever 12; this is held by the spring 35 in the first end of stroke position and therefore the end 20 is at the end 27 of the radial channel 25, leaving the latter completely free to receive the whole of the electric connector 5.

Next, the operator lifts the assembly device or equipment 10 bringing the base 13 against the edge of the hole 9, taking care to engage the guide means 32 (longitudinal members 32b, box element 32d, pin 32c) in the lateral wall 8, which is provided with recesses/ribbing for receiving, by interlocking, the longitudinal members 32b and the element 32d and with at least one recess or hole (blind) for receiving the pin 32c, not shown for the sake of simplicity. During such operation, the fork 14, which carries the electric connector 5 is inserted into the headlamp body 2 through the hole 9 and aligned with the reception seat 7, so that the channel 25 is aligned opposite it.

Finally, the operator acts on the handle 23, pushing it towards the lateral wall 8; this causes the rotation of the command lever 12 against the action of the spring 35 and, then, of the spring 40, as soon as the sleeve 42 abuts against the lateral wall 8, until the rotation movement stops in the second end of stroke position, when the pin 41 also abuts against the lateral wall 8, on which it leaves a mark.

During such movement, the device 10 is held still by the aligning means 32, which cooperate in contact with the lateral wall 9, also acting as shouldering means to absorb the reaction load caused by the thrusts exerted by the lever 12; at the same time, the end 20 of the lever 12 rotates in an opposite direction to the handle end 23, pushing the electric connector 5 outside the channel 25, to engage inside the reception seat 7; due to the rotatory motion of the end 20, the wing 29 disengages from the wing 47, and the device 10 can be extracted from the hole 9 and recovered, while the springs 35 and 40 bring the lever 12 back into the starting position. The electric connector 5 is thus perfectly mounted and inserted in the seat 7, guaranteeing a correct electric and mechanical connection. At this point, the access hole 9 is closed in a known manner with a cap (not shown) and the assembly operation ends, subject to a possible check of the presence of a mark on the lateral wall 8 (left by the upper end of the pin 41), confirming that assembly has been performed correctly.

Consequently, all of the purposes of the invention are achieved.

## Claims

1. An assembly device (10) of an electric connector (5) inside a lighting device (1) of a vehicle, the assembly device being configured to carry out a mechanical and electric connection of the electric connector in a reception seat (7) for the same, arranged within the lighting device and through an access hole (9) obtained in a lateral wall (8) of the lighting device; **characterised in that** it comprises:
i)- a retaining and aligning support (11) for the electric connector; and
ii)- a command lever (12) coupled in an oscillating manner to the support;
iii)- the support (11) comprising: an annular base (13) configured to be coupled, in use, to the access hole; a fork (14) configured to receive the electric connector in a sliding manner, the fork (14) being arranged radially inside the annular base (13) and being defined by a pair of first uprights (15) arranged facing side by side one another and extending in a cantilever fashion in an axial direction from a first face (16) of the annular base configured to be facing, in use, the access hole; and a pair of second uprights (18), that extend in a cantilever fashion in an axial direction from a second face (19) of the annular base opposite the first face and are hingedly coupled to the command lever;
iv)- the command lever (12) comprising a first fork-shaped end (20), configured to engage, by snapping, the electric connector, an intermediate portion (21) provided with hinge coupling means (22) to the pair of second uprights (18), and a second end (23), opposite the first, configured as a handle for an operator;
v)- the first end (20) of the command lever being assembled in an oscillating manner inside a radial channel (25) delimited by first uprights (15) and shaped to receive, in use, said electric connector, the first end of the command lever being mobile between a first and a second opposite end (27,28) of the radial channel after a rotation of the command lever on said hinge coupling means, respectively between a first and a second end of stroke position of the command lever (12).

2. The assembly device according to claim 1, **characterised in that** the first uprights (15) are configured to be inserted, in use, inside the lighting device through the access hole (9), to which they are apt to be coupled in a through manner and with radial clearance; and **in that** the first fork-shaped end (20) of the command lever includes a first branch (29) defined by an elastically deformable wing and arranged in a position proximal to the intermediate portion (21), and a second branch (30), arranged in a distal position from the intermediate portion and defined by a substantially rigid overhang configured to be coupled, in use, to a rear wall (31) of the electric connector facing, in use, a side opposite the reception seat; the command lever (12) being apt to cause the electric connector to slide, in use, inside the radial channel between a retracted position, wherein the command lever is in said first end of stroke position and the electric connector is entirely housed in the radial channel (25) delimited between the first uprights, and an extracted position, wherein the command lever is in said second end of stroke position and the electric connector is completely outside the radial channel.

3. The assembly device according to claim 1 or 2, **characterised in that** the annular base comprises aligning and shouldering means (32b,c,d) arranged radially towards the outside of the annular base (13) and configured to be coupled, in use, to the lateral wall (8) of the lighting device provided with the access hole.

4. The assembly device according to one of the preceding claims, **characterised in that** the hinge coupling means (22) of the command lever comprise an end of stroke stop (33) for blocking the command lever (12) in the first end of stroke position when the command lever rotates from the second and towards the first end of stroke position.

5. The assembly device according to one of the preceding claims, **characterised in that** it further comprises a first reaction spring (35) that connects a first edge (36) of the second end of the command lever, the first edge facing the side opposite the first fork-shaped end of the command lever, with an edge section (38) of the second face of the annular base, the edge section being arranged in a position radially opposite the command lever (12); the first reaction spring (35) being bound to said edge of the second end of the command lever in a distal position from the hinge coupling means (22) and being configured to block a rotation of the command lever from the first to the second end of stroke position thereof.

6. The assembly device according to claim 5, **characterised in that** it further comprises a second reaction spring (40) mounted coaxially to a pin (41) integrally carried by the second end of the command lever from which it axially protrudes in a cantilever fashion from the side opposite the first reaction spring (35) and on which a sleeve (42) is mounted in an axially sliding and telescopic manner, the sleeve, in turn, axially protruding in a cantilever fashion from the pin (41) on the side opposite the second end (23) of the command lever; the second reaction spring (40) being packed between said sleeve (42) and said second end (23) of the command lever and the sleeve (42) and the pin (41) being configured to cooperate, in use, in sequence, with the lateral wall of the lighting device provided with the access hole, the pin (41) being apt to serve as an end of stroke stop for the command lever towards the second end of stroke position and preferably being designed/configured so as to cut or leave a mark on said lateral wall (8).

7. An assembly system (45) of an electric connector inside a lighting device (1) of a vehicle, comprising the electric connector (5), a lateral wall (8) of the lighting device provided with an access hole (9) inside the lighting device, a reception seat (7) for the electric connector arranged within the lighting device in a position adjacent to said access hole, and an assembly device (10) configured to perform a mechanical and electric connection of the electric connector (5) in the reception seat; **characterised in that** the assembly device comprises
i)- a retaining and aligning support (11) for the electric connector; and
ii)- a command lever (12) coupled in a tilting manner to the support;
iii)- the support (11) comprising: an annular base (13) configured to be peripherally coupled to the access hole; a fork (14) configured to receive the electric connector (5) in a sliding manner, the fork (14) being arranged radially inside the annular base (13) and being defined by a pair of first uprights (15) facing one another and extending in a cantilever fashion in an axial direction from a first face (16) of the annular base towards the access hole; and a pair of second uprights (18), extending in a cantilever fashion in an axial direction from a second face (19) of the annular base opposite the first face and which are hingedly coupled to the command lever;
iv)- the command lever (12) comprising a first fork-shaped end (20), configured to engage a rear wall (31) of the electric connector, opposite the reception seat (7), an intermediate portion (21) provided with hinge coupling means (22) to the second pair of uprights, and a second end (23), opposite the first, configured as a handle for an operator;
v)- the first end (20) of the command lever being mounted in an oscillating manner inside a radial channel (25) delimited by the first uprights (15) and shaped to receive and guide said electric connector (5), the first end (20) of the command lever being mobile between a first and a second opposite end (27,28) of the radial channel in response to a rotation of the command lever (12) on said hinge coupling means (22), respectively between a first and a second end of stroke position of the command lever.

8. The assembly system according to claim 7, **characterised in that** the first uprights (15) and the first fork-shaped end (20) of the command lever can be inserted with radial clearance and passing through the inside of the access hole (9); the first fork-shaped end (20) of the command lever including: a first branch defined by a first elastically deformable wing (29) arranged in a position proximal to the intermediate portion (21) and apt to cooperate, by snapping, with the electric connector (5) immediately below a lower edge (46) of the rear wall (31) of the electric connector (5), in particular with a second elastically deformable wing (47) obtained in a single piece integral with the electric connector (5) below it, to which the first wing (29) is coupled by snapping; and a second branch (30), arranged in a distal position from the intermediate portion (21) and defined by a substantially rigid overhang configured to cooperate directly in contact with the lower edge (46) of the rear wall (31) of the electric connector (5), facing, in use, a side opposite the reception seat (7); the command lever (12) being configured to cause the electric connector (5) to slide in the radial channel (25) between a retracted position, wherein the command lever is in said first end of stroke position and the electric connector (5) is entirely housed in the radial channel (25) delimited between the first uprights, in a position facing the reception seat (7), and an extracted position wherein the command lever is in said second end of stroke position and the electric connector is completely outside the radial channel (25) and in an eccentric position with respect to the access hole (9), coupled to the reception seat (7), and wherein the first wing (29) disengages, by snapping, from the second wing (47) below the lower edge (46) of the rear wall (31) of the electric connector.

9. The assembly system according to claim 7 or 8, **characterised in that** the annular base (13) comprises aligning and shouldering means (32) arranged radially towards the outside of the annular base and configured to be coupled to the lateral wall (8) of the lighting device provided with the access hole.

10. A method for assembling an electric connector (5) in a reception seat (7) for the same, inside a lighting device of a vehicle, comprising the steps of:
a) providing, through a lateral wall (8) of the lighting device, an access hole (9) arranged adjacent to the reception seat;
b) arranging an assembly device (10) comprising a retaining and aligning support (11) for the electric connector and a command lever (12) coupled in a tilting manner to the support, wherein the support comprises an annular base (13) and a first fork (14) for receiving the electric connector in a sliding manner, and the command lever comprises a first fork-shaped end (20) configured to engage the electric connector (5) by snapping;
c) inserting the electric connector inside a radial channel (25) defined by the first fork keeping the command lever (12) in a first end of stroke position and so that the first end (20) of the command lever couples to the electric connector;
d) introducing the first fork (14) with the electric connector previously housed in the radial channel thereof and coupled to the first end (20) of the command lever inside the access hole (9) and peripherally coupling the annular base (13) of the support to the access hole (9);
e) rotating the command lever (12) on the support from the first and towards a second end of stroke position so as to push the first end (20) of the command lever towards the reception seat (7), to extract the electric connector from said radial channel and insert it into the reception seat;
f) the first fork-shaped end (20) of the command lever being configured to uncouple itself from the electric connector (12) when the command lever reaches the second end of stroke position.

11. The method according to claim 10, **characterised in that** aligning and shouldering means (32) are arranged on the support (11) of the assembly device, such means being configured to be coupled to the lateral wall (8) of the lighting device and/or to the access hole (9) for aligning the radial channel (25) with the reception seat (7).

## Patentansprüche

1. Montagevorrichtung (10) eines elektrischen Verbinders (5) innerhalb einer Beleuchtungsvorrichtung (1) eines Fahrzeugs, welche Montagevorrichtung dafür konfiguriert ist, eine mechanische und elektrische Verbindung des elektrischen Verbinders in einem Aufnahmesitz (7) für diesen zu vollziehen, der innerhalb der Beleuchtungsvorrichtung angeordnet ist, und durch eine in einer Seitenwand (8) der Beleuchtungsvorrichtung hergestellte Zugangsöffnung (9), **dadurch gekennzeichnet, dass** sie enthält:
i)- eine Rückhalte- und Ausrichthalterung (11) für den elektrischen Verbinder;
ii)- einen in schwingender Weise mit der Halterung gekoppelten Betätigungshebel (12);
iii)- wobei die Halterung (11) enthält: eine ringförmige Basis (13), die dafür konfiguriert ist, bei Verwendung mit der Zugangsöffnung gekoppelt zu werden; eine Gabel (14), die dafür konfiguriert ist, bei Verwendung den elektrischen Verbinder in gleitender Weise aufzunehmen, wobei die Gabel (14) radial innerhalb der ringförmigen Basis (13) angeordnet ist und durch ein Paar erste Ständer (15) gebildet ist, die nebeneinander einander gegenüberliegend angeordnet sind und in freitragender Weise in axialer Richtung von einer ersten Fläche (16) der ringförmigen Basis verlaufen, die dafür konfiguriert ist, bei Verwendung der Zugangsöffnung gegenüber zu liegen; und ein Paar zweite Ständer (18), die in freitragender Weise in einer axialen Richtung von einer zweiten Fläche (19) der ringförmigen Basis, die der ersten Fläche gegenüberliegt, verlaufen und gelenkig mit dem Betätigungshebel verbunden sind;
iv)- wobei der Betätigungshebel (12) ein erstes gabelförmiges Ende (20), das dafür konfiguriert ist, durch Einrasten den in elektrischen Verbinder einzugreifen, wobei ein Mittelteil (21) mit Scharnierverbindungselementen (22) mit dem zweiten Ständerpaar (18) versehen ist, und ein dem ersten gegenüberliegendes zweites Ende (23) aufweist, das als ein Handgriff für eine Bedienungsperson konfiguriert ist;
v)- wobei das erste Ende (20) des Betätigungshebels in schwingender Weise innerhalb eines radialen Kanals (25) angebracht ist, der durch erste Ständer (15) begrenzt ist und so geformt ist, dass er bei Verwendung den elektrischen Verbinder aufnimmt, wobei das erste Ende des Betätigungshebels zwischen einem ersten und einem zweiten, entgegengesetzten Ende (27, 28) des radialen Kanals nach einer Drehung des Betätigungshebels um die Gelenkverbindungselemente jeweils zwischen einem ersten und einem zweiten Ende der Hubposition des Betätigungshebels (12) beweglich ist.

2. Montagevorrichtung nach Anspruch 1, **dadurch gekennzeichnet, dass** die ersten Ständer (15) dafür konfiguriert sind, bei Verwendung durch die Zugangsöffnung (9) in die Beleuchtungsvorrichtung eingeführt zu werden, mit welcher sie in durchgehender Weise und mit radialem Abstand gekoppelt werden können; und dadurch, dass das erste gabelförmige Ende (20) des Betätigungshebels eine ersten Arm (29), der durch einen elastisch verformbaren Flügel gebildet ist und in einer Position proximal vom Mittelteil (21) angeordnet ist, und einen zweiten Arm (30) enthält, der in einer distalen Position von dem Mittelteil angeordnet ist und durch einen im Wesentlichen starren Überhang gebildet ist, der dafür konfiguriert ist, bei Verwendung mit einer Rückwand (31) des elektrischen Verbinders gekoppelt zu werden, die bei Verwendung zu einer dem Aufnahmesitz gegenüberliegenden Seite weist; wobei der Betätigungshebel (12) das Verschieben des elektrischen Verbinders bei Verwendung innerhalb des radialen Kanals zwischen einer zurückgezogenen Position, in welcher der Betätigungshebel am ersten Ende der Hubposition ist und der elektrische Verbinder vollständig in dem zwischen den ersten Ständern begrenzten radialen Kanal (25) untergebracht ist, und einer herausgezogenen Position, in welcher der Betätigungshebel an dem zweiten Ende der Hubposition ist und der elektrische Verbinder vollständig außerhalb des radialen Kanals ist, bewirken kann.

3. Montagevorrichtung nach Anspruch 1 oder 2, **dadurch gekennzeichnet, dass** die ringförmige Basis Ausricht- und Schultereinrichtungen (32b,c,d) aufweist, die radial zu der Außenseite der ringförmigen Basis (13) hin angeordnet sind und dafür konfiguriert sind, bei Verwendung mit der Seitenwand (8) der mit der Zugangsöffnung versehenen Beleuchtungsvorrichtung gekoppelt zu werden.

4. Montagevorrichtung nach einem der vorhergehenden Ansprüche, **dadurch gekennzeichnet, dass** die Gelenkverbindungselemente (22) des Betätigungshebels einen Hubendanschlag (33) zum Blockieren des Betätigungshebels (12) in der ersten Hubendposition aufweisen, wenn der Betätigungshebel aus der zweiten zu der ersten Hubendposition hin gedreht wird.

5. Montagevorrichtung nach einem der vorhergehenden Ansprüche, **dadurch gekennzeichnet, dass** sie ferner eine erste Reaktionsfeder (35) aufweist, die einen ersten Rand (36) des zweiten Endes des Betätigungshebels, welcher erste Rand zu der dem ersten gabelförmigen Ende des Betätigungshebels gegenüberliegenden Seite weist, mit einem Randabschnitt (38) der zweiten Fläche der ringförmigen Basis verbindet, welcher Randabschnitt in einer dem Betätigungshebel (12) radial gegenüberliegenden Position angeordnet ist; wobei die erste Reaktionsfeder (35) mit dem Rand des zweiten Endes des Betätigungshebels in einer distalen Position von den Gelenkverbindungselementen (22) verbunden ist und dafür konfiguriert ist, eine Drehung des Betätigungshebels von dem ersten zu dem zweiten Ende seiner Hubposition zu blockieren.

6. Montagevorrichtung nach Anspruch 5, **dadurch gekennzeichnet, dass** sie ferner eine zweite Reaktionsfeder (40) aufweist, die koaxial mit einem Stift (41) angebracht ist, der einstückig von dem zweiten Ende des Betätigungshebels getragen wird, von welchem er in freitragender Weise von der der ersten Reaktionsfeder (35) gegenüberliegenden Seite axial vorragt und an welchem eine Buchse (42) in axial teleskopisch verschiebbarer Weise angebracht ist, wobei die Buchse wiederum in freitragender Weise über den Stift (41) auf der dem zweiten Ende (23) des Betätigungshebels gegenüberliegenden Seite axial vorragt; wobei die zweite Reaktionsfeder (40) zwischen die Buchse (42) und das zweite Ende (23) des Betätigungshebels gepackt ist und die Buchse (42) und der Stift (41) dafür konfiguriert sind, bei Verwendung in Abfolge mit der mit der Zugangsöffnung versehenen Seitenwand der Beleuchtungsvorrichtung zusammenzuwirken, wobei der Stift (41) als ein Hubendanschlag für den Betätigungshebel zu dem zweiten Ende der Hubposition hin dienen kann und vorzugsweise so konstruiert/konfiguriert ist, dass er eine Markierung an der Seitenwand (8) einschneidet oder hinterlässt.

7. Montagesystem (45) eines elektrischen Verbinders innerhalb einer Beleuchtungsvorrichtung (1) eines Fahrzeugs, enthaltend den elektrischen Verbinder (5), eine mit einer Zugangsöffnung (9) in das Innere der Beleuchtungsvorrichtung versehene Seitenwand (8) der Beleuchtungsvorrichtung, einen innerhalb der Beleuchtungsvorrichtung an einer der Zugangsöffnung benachbarten Position angeordneten Aufnahmesitz (7) für den elektrischen Verbinder, und eine Montagevorrichtung (10), die dafür konfiguriert ist, eine mechanische und elektrische Verbindung des elektrischen Verbinders (5) in dem Aufnahmesitz zu vollziehen; **dadurch gekennzeichnet, dass** die Montagevorrichtung enthält:
i)- eine Rückhalte- und Ausrichthalterung (11) für den elektrischen Verbinder; und
ii)- einen in kippbarer Weise mit der Halterung gekoppelten Betätigungshebel (12);
iii)- wobei die Halterung (11) enthält: eine ringförmige Basis (13), die dafür konfiguriert ist, am Umfang mit der Zugangsöffnung gekoppelt zu werden; eine Gabel (14), die dafür konfiguriert ist, den elektrischen Verbinder in gleitender Weise aufzunehmen, wobei die Gabel (14) radial innerhalb der ringförmigen Basis (13) angeordnet ist und durch ein Paar erste Ständer (15) gebildet ist, die einander gegenüberliegen und in freitragender Weise in einer axialen Richtung von einer ersten Fläche (16) der ringförmigen Basis zu der Zugangsöffnung hin verlaufen; und ein Paar zweite Ständer (18), die in freitragender Weise in einer axialen Richtung von einer zweiten Fläche (19) der ringförmigen Basis, die der ersten Fläche gegenüberliegt, verlaufen und gelenkig mit dem Betätigungshebel verbunden sind;
iv)- wobei der Betätigungshebel (12) ein erstes gabelförmiges Ende (20), das dafür konfiguriert ist, in eine Hinterwand des elektrischen Verbinders entgegengesetzt zu dem Aufnahmesitz (7) einzugreifen, wobei ein Mittelteil (21) mit Scharnierverbindungselementen (22) mit dem zweiten Ständerpaar (18) versehen ist, und ein dem ersten gegenüberliegendes zweites Ende (23) aufweist, das als ein Handgriff für eine Bedienungsperson konfiguriert ist;
v)- wobei das erste Ende (20) des Betätigungshebels in schwingender Weise innerhalb eines radialen Kanals (25) angebracht ist, der durch die ersten Ständer (15) begrenzt ist und so geformt ist, dass er den elektrischen Verbinder aufnimmt und führt, wobei das erste Ende (20) des Betätigungshebels zwischen einem ersten und einem zweiten, entgegengesetzten Ende (27, 28) des radialen Kanals ansprechend auf eine Drehung des Betätigungshebels (12) um die Gelenkverbindungselemente (22) jeweils zwischen einem ersten und einem zweiten Ende der Hubposition des Betätigungshebels beweglich ist.

8. Montagesystem nach Anspruch 7, **dadurch gekennzeichnet, dass** die ersten Ständer (15) und die ersten gabelförmigen Enden (20) des Betätigungshebels mit radialem Abstand und durch das Innere der Zugangsöffnung (9) tretend eingeführt werden können; wobei das erste gabelförmige Ende (20) des Betätigungshebels enthält: einen ersten Arm, der durch einen elastisch verformbaren Flügel (29) gebildet ist, der in einer zu dem Mittelteil (21) proximalen Position angeordnet ist und durch Einschnappen mit dem elektrischen Verbinder (5) unmittelbar unter einem unteren Rand (46) der Rückwand (31) des elektrischen Verbinders (5) zusammenwirken kann, insbesondere mit einem zweiten elastisch verformbaren Flügel (47), der in einem Stück in den darunter liegenden elektrischen Verbinder (5) integriert erhalten wird, mit welchem der erste Flügel durch Einschnappen gekoppelt wird; und einen zweiten Arm (30), der in einer distalen Position von dem Mittelteil angeordnet ist und durch einen im Wesentlichen starren Überhang gebildet ist, der dafür konfiguriert ist, direkt in Kontakt mit dem unteren Rand (46) der Rückwand (31) des elektrischen Verbinders (5) zusammenzuwirken, die bei Verwendung zu einer dem Aufnahmesitz (7) gegenüberliegenden Seite weist; wobei der Betätigungshebel (12) dafür konfiguriert ist, das Verschieben des elektrischen Verbinders in dem radialen Kanal (25) zwischen einer zurückgezogenen Position, in welcher der Betätigungshebel am ersten Ende der Hubposition ist und der elektrische Verbinder (5) vollständig in dem zwischen den ersten Ständern begrenzten radialen Kanal (25) in einer dem Aufnahmesitz (7) gegenüberliegenden Position untergebracht ist, und einer herausgezogenen Position, in welcher der Betätigungshebel an dem zweiten Ende der Hubposition ist und der elektrische Verbinder vollständig außerhalb des radialen Kanals (25) und in einer exzentrischen Position in Bezug auf die Zugangsöffnung (9), mit dem Aufnahmesitz (7) gekoppelt, ist, veranlassen kann, und wobei der erste Flügel durch Schnappen mit dem zweiten Flügel (47) unter dem unteren Rand (46) der Rückwand (31) des elektrischen Verbinders außer Eingriff kommt.

9. Montagesystem nach Anspruch 7 oder 8, **dadurch gekennzeichnet, dass** die ringförmige Basis (13) Ausricht- und Schultereinrichtungen (32) aufweist, die radial zu der Außenseite der ringförmigen Basis hin angeordnet sind und dafür konfiguriert sind, mit der Seitenwand (8) der mit der Zugangsöffnung versehenen Beleuchtungsvorrichtung gekoppelt zu werden.

10. Verfahren für die Montage eines elektrischen Verbinders (5) in seinem Aufnahmesitz (7) innerhalb einer Beleuchtungsvorrichtung eines Fahrzeugs, enthaltend die Schritte:
a) Bereitstellen einer dem Aufnahmesitz benachbart angeordneten Zugangsöffnung (9) durch eine Seitenwand (8) der Beleuchtungsvorrichtung;
b) Anordnen einer Montagevorrichtung (10), die eine Rückhalte- und Ausrichthalterung (11) für den elektrischen Verbinder und einen Betätigungshebel (12) aufweist, der in einer kippenden Weise mit der Halterung gekoppelt ist, wobei die Halterung eine ringförmige Basis (13) und eine erste Gabel (14) zur Aufnahme des elektrischen Verbinders in gleitender Weise enthält und der Betätigungshebel ein erstes gabelförmiges Ende (20) aufweist, das dafür konfiguriert ist, in den elektrischen Verbinder durch Einschnappen einzugreifen;
c) Einführen des elektrischen Verbinders in einen radialen Kanal (25), der durch die erste Gabel gebildet ist, wobei der Betätigungshebel (12) in einer ersten Hubendposition gehalten wird und so, dass das erste Ende (20) des Betätigungshebels sich mit dem elektrischen Verbinder koppelt;
d) Einführen der ersten Gabel (14) mit dem zuvor in ihrem radialen Kanal untergebrachten und mit dem ersten Ende (20) des Betätigungshebels innerhalb der Zugangsöffnung (9) gekoppelten elektrischen Verbinders und umfängliches Koppeln der ringförmigen Basis (13) der Halterung mit der Zugangsöffnung (9);
e) Drehen des Betätigungshebels (12) an der Halterung aus der ersten und zu der zweiten Hubendposition hin, so dass das erste Ende (20) des Betätigungshebels zu dem Aufnahmesitz (7) hin geschoben wird, um den elektrischen Verbinder aus dem radialen Kanal herauszuziehen und ihn in den Aufnahmesitz einzuführen;
f) wobei das erste gabelförmige Ende (20) des Betätigungshebels dafür konfiguriert ist, sich von dem elektrischen Verbinder (12) abzukoppeln, wenn der Betätigungshebel die zweite Hubendposition erreicht.

11. Verfahren nach Anspruch 10, **dadurch gekennzeichnet, dass** die Ausricht- und Schultereinrichtungen (32) an der Halterung (11) der Montagevorrichtung angeordnet sind, wobei diese Einrichtungen dafür konfiguriert sind, mit der Seitenwand (8) der Beleuchtungsvorrichtung und/oder der Zugangsöffnung (9) zum Ausrichten des radialen Kanals (25) mit dem Aufnahmesitz (7) gekoppelt zu werden.

## Revendications

1. Dispositif d'assemblage (10) d'un connecteur électrique (5) à l'intérieur d'un dispositif d'éclairage (1) d'un véhicule, le dispositif d'assemblage étant configuré pour réaliser un raccordement mécanique et électrique du connecteur électrique dans un siège de réception (7) pour ce dernier, agencé dans le dispositif d'éclairage et à travers un trou d'accès (9) obtenu dans une paroi latérale (8) du dispositif d'éclairage ; **caractérisé en ce qu'**il comprend :
i) un support de retenue et d'alignement (11) pour le connecteur électrique ; et
ii) un levier de commande (12) couplé d'une manière oscillante au support ;
iii) le support (11) comprenant : une base annulaire (13) configurée pour être couplée, en utilisation, au trou d'accès ; une fourche (14) configurée pour recevoir le connecteur électrique d'une manière coulissante, la fourche (14) étant agencée radialement à l'intérieur de la base annulaire (13) et étant définie par une paire de premiers montants (15) agencés côte à côte l'un par rapport à l'autre et s'étendant en porte-à-faux dans une direction axiale à partir d'une première face (16) de la base annulaire configurée pour être en face, en utilisation, du trou d'accès ; et une paire de seconds montants (18) qui s'étendent en porte-à-faux dans une direction axiale à partir d'une seconde face (19) de la base annulaire opposée à la première face et sont couplés de manière articulée au levier de commande ;
iv) le levier de commande (12) comprenant une première extrémité en forme de fourche (20), configurée pour mettre en prise, par encliquetage, le connecteur électrique, une partie intermédiaire (21) prévue avec des moyens de couplage à charnière (22) sur la paire de seconds montants (18), et une seconde extrémité (23), opposée à la première, configurée sous la forme d'une poignée pour un opérateur ;
v) la première extrémité (20) du levier de commande étant assemblée d'une manière oscillante à l'intérieur d'un canal radial (25) délimité par les premiers montants (15) et formé pour recevoir, en utilisation, ledit connecteur électrique, la première extrémité du levier de commande étant mobile entre une première et une seconde extrémité (27, 28) opposée du canal radial après une rotation du levier de commande sur lesdits moyens de couplage à charnière, respectivement entre une première et une seconde position de fin de course du levier de commande (12).

2. Dispositif d'assemblage selon la revendication 1, **caractérisé en ce que** les premiers montants (15) sont configurés pour être insérés, en utilisation, à l'intérieur du dispositif d'éclairage par le trou d'accès (9), auquel ils sont aptes à être couplés d'une manière débouchante et avec un jeu radial ; et **en ce que** la première extrémité en forme de fourche (20) du levier de commande comprend une première branche (29) définie par une aile élastiquement déformable et agencée dans une position proximale à partir de la partie intermédiaire (21) et une seconde branche (30), agencée dans une position distale par rapport à la partie intermédiaire et définie par une saillie configurée pour être couplée, en utilisation, à une paroi arrière (31) du connecteur électrique, faisant face, en utilisation, à un côté opposé au siège de réception ; le levier de commande (12) étant apte à amener le connecteur électrique à coulisser, en utilisation, à l'intérieur du canal radial entre une position rétractée dans laquelle le levier de commande est dans ladite première position de fin de course et le connecteur électrique est complètement logé dans le canal radial (25) délimité entre les premiers montants et une position extraite dans laquelle le levier de commande est dans ladite seconde position de fin de course et le connecteur électrique est complètement à l'extérieur du canal radial.

3. Dispositif d'assemblage selon la revendication 1 ou 2, **caractérisé en ce que** la base annulaire comprend des moyens d'alignement et d'épaulement (32b, c, d) agencés radialement vers l'extérieur de la base annulaire (13) et configurés pour être couplés, en utilisation, à la paroi latérale (8) du dispositif d'éclairage prévu avec le trou d'accès.

4. Dispositif d'assemblage selon l'une des revendications précédentes, **caractérisé en ce que** les moyens de couplage à charnière (22) du levier de commande comprennent un arrêt de fin de course (33) pour bloquer le levier de commande (12) dans la première position de fin de course lorsque le levier de commande tourne à partir de la seconde position et vers la première position de fin de course.

5. Dispositif d'assemblage selon l'une des revendications précédentes, **caractérisé en ce qu'**il comprend en outre un premier ressort de réaction (35) qui raccorde un premier bord (36) de la seconde extrémité du levier de commande, le premier bord faisant face au côté opposé à la première extrémité en forme de fourche du levier de commande, avec une section de bord (38) de la seconde face de la base annulaire, la section de bord étant agencée dans une position radialement opposée au levier de commande (12) ; le premier ressort de réaction (35) étant lié audit bord de la seconde extrémité du levier de commande dans une position distale à partir des moyens de couplage à charnière (22) et étant configuré pour empêcher une rotation du levier de commande de sa première à sa seconde position de fin de course.

6. Dispositif d'assemblage selon la revendication 5, **caractérisé en ce qu'**il comprend en outre un second ressort de réaction (40) monté de manière coaxiale sur une broche (41) portée, de manière solidaire, par la seconde extrémité du levier de commande à partir de laquelle il fait axialement saillie en porte-à-faux à partir du côté opposé au premier ressort de réaction (35) et sur lequel un manchon (42) est monté d'une manière axialement coulissante et télescopique, le manchon faisant, à son tour, saillie axialement en porte-à-faux de la broche (41) sur le côté opposé à la seconde extrémité (23) du levier de commande ; le second ressort de réaction (40) étant empilé entre ledit manchon (42) et ladite seconde extrémité (23) du levier de commande et le manchon (42) et la broche (41) étant configurés pour coopérer, en utilisation, en séquence, avec la paroi latérale du dispositif d'éclairage prévu avec le trou d'accès, la broche (41) étant apte à servir d'arrêt de fin de course pour le levier de commande vers la seconde position de fin de course et de préférence étant conçue/configurée pour inciser ou laisser une marque sur ladite paroi latérale (8).

7. Système d'assemblage (45) d'un connecteur électrique à l'intérieur d'un dispositif d'éclairage (1) d'un véhicule, comprenant le connecteur électrique (5), une paroi latérale (8) du dispositif d'éclairage prévu avec un trou d'accès (9) à l'intérieur du dispositif d'éclairage, un siège de réception (7) pour le connecteur électrique agencé dans le dispositif d'éclairage dans une position adjacente audit trou d'accès, et un dispositif d'assemblage (10) configuré pour réaliser un raccordement mécanique et électrique du connecteur électrique (5) dans le siège de réception ; **caractérisé en ce que** le dispositif d'assemblage comprend :
i) un support de retenue et d'alignement (11) pour le connecteur électrique ; et
ii) un levier de commande (12) couplé d'une manière inclinée au support ;
iii) le support (11) comprenant : une base annulaire (13) configurée pour être couplée, de manière périphérique, au trou d'accès ; une fourche (14) configurée pour recevoir le connecteur électrique (5) d'une manière coulissante, la fourche (14) étant agencée radialement à l'intérieur de la base annulaire (13) et étant définie par une paire de premiers montants (15) se faisant face et s'étendant en porte-à-faux dans une direction axiale à partir d'une première face (16) de la base annulaire vers le trou d'accès ; et une paire de seconds montants (18) qui s'étendent en porte-à-faux dans une direction axiale à partir d'une seconde face (19) de la base annulaire opposée à la première face et sont couplés de manière articulée au levier de commande ;
iv) le levier de commande (12) comprenant une première extrémité en forme de fourche (20), configurée pour mettre en prise une paroi arrière (31) du connecteur électrique opposée au siège de réception (7), une partie intermédiaire (21) prévue avec des moyens de couplage à charnière (22) sur la seconde paire de montants, et une seconde extrémité (23), opposée à la première, configurée sous la forme d'une poignée pour un opérateur ;
v) la première extrémité (20) du levier de commande étant montée d'une manière oscillante à l'intérieur d'un canal radial (25) délimité par les premiers montants (15) et formé pour recevoir et guider ledit connecteur électrique (5), la première extrémité (20) du levier de commande étant mobile entre une première et une seconde extrémité (27, 28) du canal radial en réponse à une rotation du levier de commande (12) sur lesdits moyens de couplage à charnière (22), respectivement entre une première et une seconde position de fin de course du levier de commande.

8. Système d'assemblage selon la revendication 7, **caractérisé en ce que** les premiers montants (15) et la première extrémité en forme de fourche (20) du levier de commande peuvent être insérés avec un jeu radial et passant par l'intérieur du trou d'accès (9) ; la première extrémité en forme de fourche (20) du levier de commande comprenant : une première branche définie par une première aile élastiquement déformable (29) agencée dans une position proximale par rapport à la partie intermédiaire (21) et apte à coopérer, par encliquetage, avec le connecteur électrique (5) immédiatement au-dessous d'un bord inférieur (46) de la paroi arrière (31) du connecteur électrique (5), en particulier avec une seconde aile élastiquement déformable (47) obtenue en une seule pièce solidaire avec le connecteur électrique (5) au-dessous de cette dernière, auquel la première aile (29) est couplée par encliquetage ; et une seconde branche (30) agencée dans une position distale par rapport à la partie intermédiaire (21) et définie par une saillie sensiblement rigide configurée pour coopérer directement en contact avec le bord inférieur (46) de la paroi arrière (31) du connecteur électrique (5) faisant face, en utilisation, à un côté opposé au siège de réception (7) ; le levier de commande (12) étant configuré pour amener le connecteur électrique (5) à coulisser dans le canal radial (25) entre une position rétractée dans laquelle le levier de commande est dans ladite première position de fin de course et le connecteur (5) est complètement logé dans le canal radial (25) délimité entre les premiers montants, dans une position faisant face au siège de réception (7), et une position extraite dans laquelle le levier de commande est dans ladite seconde position de fin de course et le connecteur électrique est complètement à l'extérieur du canal radial (25) et dans une position excentrique par rapport au trou d'accès (9), couplé au siège de réception (7), et dans lequel la première aile (29) se dégage, par encliquetage, de la seconde aile (47) au-dessous du bord inférieur (46) de la paroi arrière (31) du connecteur électrique.

9. Système d'assemblage selon la revendication 7 ou 8, **caractérisé en ce que** la base annulaire (13) comprend des moyens d'alignement et d'épaulement (32) agencés radialement vers l'extérieur de la base annulaire et configurés pour être couplés à la paroi latérale (8) du dispositif d'éclairage prévu avec le trou d'accès.

10. Procédé pour assembler un connecteur électrique (5) dans un siège de réception (7) pour ce dernier, à l'intérieur d'un dispositif d'éclairage d'un véhicule, comprenant les étapes suivantes :
a) prévoir, à travers une paroi latérale (8) du dispositif d'éclairage, un trou d'accès (9) agencé de manière adjacente au siège de réception ;
b) agencer un dispositif d'assemblage (10) comprenant un support de retenue et d'alignement (11) pour le connecteur électrique et un levier de commande (12) couplé, d'une manière inclinée, au support, dans lequel le support comprend une base annulaire (13) et une première fourche (14) pour recevoir le connecteur électrique d'une manière coulissante, et le levier de commande comprend une première extrémité en forme de fourche (20) configurée pour mettre en prise le connecteur électrique (5) par encliquetage ;
c) insérer le connecteur électrique à l'intérieur d'un canal radial (25) défini par la première fourche maintenant le levier de commande (12) dans une première position de fin de course et de sorte que la première extrémité (20) du levier de commande se couple au connecteur électrique ;
d) introduire la première fourche (14) avec le connecteur électrique préalablement logé dans son canal radial et couplé à la première extrémité (20) du levier de commande à l'intérieur du trou d'accès (9) et coupler, de manière périphérique, la base annulaire (13) du support au trou d'accès (9) ;
e) faire tourner le levier de commande (12) sur le support à partir de la première position et vers une seconde position de fin de course afin de pousser la première extrémité (20) du levier de commande vers le siège de réception (7), pour extraire le connecteur électrique dudit canal radial et l'insérer dans le siège de réception ;
f) la première extrémité en forme de fourche (20) du levier de commande étant configurée pour se découpler elle-même du connecteur électrique (12) lorsque le levier de commande atteint la seconde position de fin de course.

11. Procédé selon la revendication 10, **caractérisé en ce que** les moyens d'alignement et d'épaulement (32) sont agencés sur le support (11) du dispositif d'assemblage, de tels moyens étant configurés pour être couplés à la paroi latérale (8) du dispositif d'éclairage et/ou du trou d'accès (9) pour aligner le canal radial (25) avec le siège de réception (7).
